# EUROPÄISCHE PATENTSCHRIFT

(11) **EP 2 732 309 B1**
(45) Veröffentlichungstag und Bekanntmachung des Hinweises auf die Patenterteilung: **13.05.2020**
(21) Anmeldenummer: 12745654.9
(22) Anmeldetag: 16.07.2012
(51) Int. Cl.: G01S 17/02, G01S 7/481, G01S 17/93

(54) **OPTISCHE MESSVORRICHTUNG FÜR EIN FAHRZEUG, FAHRERASSISTENZEINRICHTUNG MIT EINER DERARTIGEN MESSVORRICHTUNG SOWIE FAHRZEUG MIT EINER ENTSPRECHENDEN MESSVORRICHTUNG**
OPTICAL MEASUREMENT DEVICE FOR A VEHICLE, DRIVER-ASSISTANCE DEVICE COMPRISING SUCH A MEASUREMENT DEVICE, AND A VEHICLE WHICH COMPRISES A CORRESPONDING MEASUREMENT DEVICE
DISPOSITIF DE MESURE OPTIQUE POUR UN VÉHICULE, APPAREIL D'ASSISTANCE AU CONDUCTEUR COMPRENANT UN TEL DISPOSITIF DE MESURE AINSI QUE VÉHICULE ÉQUIPÉ D'UN DISPOSITIF DE MESURE CORRESPONDANT

(30) Priorität: 16.07.2011 DE 102011107594
(43) Veröffentlichungstag der Anmeldung: 21.05.2014
(73) Patentinhaber: Valeo Schalter und Sensoren GmbH, 74321 Bietigheim-Bissingen (DE)
(72) Erfinder: BAYHA, Heiner, 74321 Bietigheim-Bissingen (DE); HORVATH, Peter, 71665 Vaihingen a. d. E. (DE); NICOLAI, Jens, 03103 Neupetershain (DE)
(74) Vertreter: Withopf, Kristina
(86) Internationale Anmeldenummer: PCT/EP2012/063894
(87) Internationale Veröffentlichungsnummer: WO 2013/010983

(56) Entgegenhaltungen:
- EP-A1- 2 073 047
- EP-A2- 1 492 208
- WO-A1-2011/076506
- JP-A- H 085 876
- US-A- 4 479 053
- US-A- 5 933 225
- US-A1- 2004 222 366
- US-A1- 2004 263 825

## Beschreibung

Die Erfindung betrifft eine optische Messvorrichtung für ein Fahrzeug, mit zumindest einem optischen Sender, zumindest einem optischen Empfänger und einer Umlenkspiegelanordnung mit zumindest einem Umlenkspiegel. Des Weiteren betrifft die Erfindung eine Fahrerassistenzeinrichtung mit einer derartigen optischen Messvorrichtung als auch ein Fahrzeug mit einer derartigen optischen Messvorrichtung.

Aus dem Stand der Technik sind abtastende optische Messvorrichtungen, so genannte Laserscanner für Fahrzeuge zur Erkennung von Objekten bzw. Hindernissen in einem Überwachungsbereich in der Fahrzeugumgebung bekannt, welche die Entfernung zu im Überwachungsbereich erkannten Objekten bzw. Hindernissen nach dem Lichtimpulslaufzeitverfahren bestimmen.

In der DE 10 2005 055 572 B4 ist beispielsweise ein abtastender optischer Entfernungssensor beschrieben. Dieser Entfernungssensor umfasst mindestens einen Laser als optischen Sender, mindestens einen Detektor als optischen Empfänger und eine Umlenkeinheit, welche mit einem ersten Spiegel eine Laserstrahlung auf die zu ermessende Szene umlenkt, und mit einem zweiten Spiegel die von Objekten zurückgestreuten Laserimpulse auf den mindestens einen Detektor umlenkt. Hierbei sind der erste und zweite Spiegel auf einer gemeinsamen drehbaren Achse auf einer jeweiligen Halterung angeordnet und von einer Antriebseinheit angetrieben, die zwischen beiden Halterungen angeordnet ist.

Aus der US 7,710,545 ist ein vergleichbares System bekannt, dass zur Gewinnung von Umgebungsinformationen um ein Fahrzeug verwendet wird. Dieses System wird vorzugsweise hinter dem Kühlergrill des Fahrzeugs platziert, und dient zum Abtasten des vorderen Bereichs vor dem Fahrzeug für ein Fahrerassistenzsystem.

Aus der US 4 479 053 A ist ein optischer Näherungssensor für die optische Detektion eines Objektes innerhalb eines vorbestimmten Detektionsvolumens bekannt.

Aus der US 5 933 225 A ist eine optische Radarvorrichtung bekannt, die dazu ausgelegt ist, eine Betriebseffizienz zu verbessern, indem emittierte Lichtstrahlen kontinuierlich eine horizontale Richtung abtasten und eine Diffusionswinkel-Einstelleinrichtung einen Diffusionswinkel der emittierten Lichtstrahlen in vertikaler Richtung einstellt.

In der US 2004/222366 A1 wird eine Vorrichtung mit einem Detektorelement zum Empfang eines an einem Objekt reflektierten Lichtstrahls offenbart, wobei Mittel zur Umlenkung des Lichtstrahls auf das Detektorelement vorgesehen sind.

Aus der JP H08 5876 A ist ein Linsenhalterelement bekannt, dass keine Fehlausrichtung während eines Laserschweißens erzeugt und in der Lage ist, den Linsenhalter während des Zusammenbauvorgangs und ein Modul zur Lichtübertragung unter Verwendung des Elements genau in eine gewünschte Position zu bringen.

Aus der WO 2011/076506 A1 ist ein Verfahren zur Herstellung einer Laservorrichtung mit einer gegenüber einem Halbleiter-Laser lagejustierten Linse bekannt.

Aus der US 2004/263825 A1 ist ein Messgerät zur berührungslosen Abstandsmessung bekannt, mit einem eine optische Achse aufweisenden optischen Sendepfad, der als Komponente einen optischen Sender aufweist, mit einem eine zweite optische Achse aufweisenden optischen Empfangspfad, der als Komponenten eine Empfängeroptik und einen optischen Empfänger aufweist, wobei der Sendepfad und der Empfangspfad jeweils optisch gefaltet sind, und mit einem die Komponenten von Sende- und Empfangspfad aufnehmenden Gerätemodul, das einen die Empfängeroptik tragenden Optikträger und eine an diesem befestigte Leiterplatte aufweist, auf der Sender und Empfänger gemeinsam angeordnet sind, wobei die Befestigung der Leiterplatte am Optikträger so vorgenommen ist, dass die Leiterplatte möglichst parallel zu einer durch die erste optische Achse und die zweite optische Achse verlaufenden Ebene ausgerichtet ist

Aus der EP 2 073 047 A1 ist eine Vorrichtung zur Justage und zur Fixierung optischer Komponenten in mehr als zwei Achsen bekannt, insbesondere eine Vorrichtung zur Justage von Kollimationslinsen für Halbleiterlaser. Hierbei wird vorgeschlagen, dass zum Zweck der Vermeidung großräumiger Klebespalte und dem mit diesen Klebespalten verbundenen Verzug beim Aushärten des Klebewerkstoffs bei einer mehrachsigen Justage eine mehrteilige Trägerkonstruktion verwendet wird, wobei jedes einzelne Teil der Trägerkonstruktion in ein bis drei Achsen im Raum positionierbar ist.

Aufgrund der vorgesehenen Aufbaustelle des Laserscanners im Fahrzeug, d. h. beispielsweise am vorderen Teil vor dem Kühler, gegebenenfalls sogar direkt am Kühlergrill integriert, muss der Platzbedarf des Laserscanners minimiert werden. Die Anforderungen des Aufbaus der Empfangseinheit der Messvorrichtung mit der Empfangslinse, dem Umlenkspiegel und dem Sensor, welcher üblicherweise ein APD

(Avalanche Photodiode Detector)-Sensor ist, sehr groß. Insbesondere ist die Justage des Sensors bzw. des Empfängers innerhalb der Empfangseinheit sehr genau, d. h. auf ca. 20 µm durchzuführen.

Es ist Aufgabe der vorliegenden Erfindung, eine optische Messvorrichtung sowie eine Fahrerassistenzeinrichtung mit einer derartigen Messvorrichtung als auch ein Fahrzeug mit einer derartigen Messvorrichtung zu schaffen, die kompakt und bauraumminimiert aufgebaut ist.

Diese Aufgabe wird durch eine optische Messvorrichtung, eine Fahrerassistenzeinrichtung und ein Fahrzeug gemäß den unabhängigen Ansprüchen gelöst.

Eine erfindungsgemäße optische Messvorrichtung für ein Fahrzeug umfasst zumindest einen optischen Sender, zumindest einen optischen Empfänger und eine Umlenkspiegelanordnung mit zumindest einem Umlenkspiegel. Die Messvorrichtung weist einen Träger auf, auf dem zumindest einige der Komponenten Sender, Empfänger und die Umlenkspiegelanordnung angeordnet sind. An diesen Träger ist eine erste Justagevorrichtung ausgebildet, durch welche eine am Empfangsstrahlengang angeordnete Empfangslinse der Messvorrichtungen in ihrer Position relativ zum Träger einstellbar ist und eine zweite Justagevorrichtung ausgebildet ist, durch welche ein im Empfangsstrahlengang angeordneter Umlenkspiegel in seiner Position relativ zum Träger einstellbar ist. Die Messvorrichtung umfasst somit insbesondere eine Empfangseinheit umfassend die Empfangslinse und den Umlenkspiegel, die jeweils separat relativ zu dem Träger verschoben und spezifisch positioniert werden können.

Durch die erfindungsgemäße optische Messvorrichtung ist es daher nicht mehr erforderlich, den Empfänger in aufwändiger und fehleranfälliger Weise in seiner Position relativ zum Träger aktiv verschieben bzw. anders positionieren zu müssen, um eine justierte Gesamteinheit schaffen zu können. Da, wie bereits oben angesprochen, die Justage in Mikrometerbereich zu erfolgen hat, kann durch die erfindungsgemäße optische Messvorrichtung der Empfänger bereits ortsfest insbesondere am Träger positioniert werden und muss demgegenüber nicht mehr umpositioniert werden. Die Empfangslinse und/oder der Umlenkspiegel sind demgegenüber durch die geschaffenen Justagevorrichtungen individueller und einfacher in ihrer Position zu verändern, insbesondere in dem genannten Submillimeterbereich auch präzise umzupositionieren. Der Empfänger wird somit auf eine definierte Position auf den Träger montiert. Die Justage erfolgt gemäß der Erfindung dadurch, dass der in der Empfangseinheit angeordnete Umlenkspiegel und/oder die in der Empfangseinheit angeordnete Empfangslinse separat verschoben werden und dementsprechend dann nach der korrekten Positionierung positionsfixiert werden.

Die optische Messvorrichtung umfasst darüber hinaus auch eine Sendeeinheit, welche den optischen Sender, der beispielsweise ein gepulst betreibbarer Laser sein kann, und eine Sendeoptik aufweist. Die Sendeoptik kann insbesondere einen oder mehrere Umlenkspiegel aufweisen, die als Sendeumlenkspiegel bezeichnet werden. Demgegenüber kann der zumindest eine, der Empfangseinheit zugeordnete Umlenkspiegel, als Empfangsumlenkspiegel bezeichnet werden.

Erfindungsgemäß ist vorgesehen, dass die Empfangslinse einen Halterahmen aufweist, an dem Eingriffselemente zum Eingriff in die erste Justagevorrichtung ausgebildet sind. Die Empfangslinse ist somit über den Halterahmen direkt mit dem Träger verbunden, wobei diesbezüglich der Eingriff über die Eingriffselemente in die in den Träger integrierte erste Justagevorrichtung erfolgt.

Erfindungsgemäß ist vorgesehen, dass der Halterahmen die Empfangslinse umfangsseitig zumindest teilweise umgreift, beispielsweise auch vollständig umgreift. Die mechanisch stabile Halterung und die genaue Justage im Hinblick auf die Einstellung der Relativposition der Empfangslinse zum Träger und somit auch zum daran ortsfest angeordneten Empfänger ist dadurch besonders präzise möglich.

Vorzugsweise ist vorgesehen, dass ein erstes Eingriffselement an einer Unterseite des Halterahmens angeordnet ist und als streifenartige Lasche ausgebildet ist. Dadurch kann ein besonders schmales und im Hinblick auf eine geradlinige Verschiebung der Empfangslinse besonders geeignetes Element bereitgestellt werden. Auch dies begünstigt die Bauraumminimierung wesentlich.

Vorzugsweise ist vorgesehen, dass eine erste schlitzartige Vertiefung der ersten Justagevorrichtung in einem Boden des Trägers ausgebildet ist und ein erstes Eingriffselement des Halterahmens in der ersten Vertiefung vor der Positionsfixierung der Empfangslinse zum Träger in einer ersten Raumrichtung und/oder in einer dazu senkrechten zweiten Raumrichtung geradlinig verschiebbar angeordnet ist. Es wird also in einer besonders hervorzuhebenden Ausführung eine Justagevorrichtung geschaffen, die es ermöglicht, dass die Empfangslinse in zwei senkrecht zueinander stehenden Raumrichtungen relativ zum Träger und somit auch zum optischen Empfänger positionsverändert werden kann. Die schlitzartige Vertiefung ist in mehrerer Hinsicht dadurch besonders vorteilhaft. Indem sie in den Boden integriert und somit eingesenkt ist, kann sie im Hinblick auf die Bauhöhe des Bodens minimiert und insbesondere die Bauhöhe des Bodens nicht vergrößernd ausgebildet werden. Diese Nut bzw. schlitzartige Vertiefung gewährleistet darüber hinaus in besonderer Präzision der Bewegungsführung die Aufnahme des laschenartigen Eingriffselements am Halterahmen der Empfangslinse. Es kann somit durch die plattenartige bzw. streifenartige Ausgestaltung des ersten Eingriffselements eine Linearverschiebung der Empfangslinse in Richtung der schlitzartigen Vertiefung gewährleistet werden. Andererseits ist es jedoch auch möglich, dass in senkrechter Raumrichtung dazu das Eingriffselement mehr oder weniger in diese schlitzartige Vertiefung eingesenkt wird, sodass auch in der zweiten Raumrichtung quasi eine Höhenverstellung der Empfangslinse relativ zum Träger und somit auch zum optischen Empfänger möglich ist.

Vorzugsweise ist vorgesehen, dass eine zweite schlitzartige Vertiefung der ersten Justagevorrichtung in einer Seitenwand des Trägers ausgebildet ist und ein zweites Eingriffselement in der zweiten Vertiefung vor der Positionsfixierung der Empfangslinse zum Träger in einer ersten Raumrichtung und/oder in einer dazu senkrechten zweiten Raumrichtung gradlinig verschiebbar angeordnet ist. Die oben genannten Vorteile gelten hier analog.

Darüber hinaus wird durch diese zweite schlitzartige Vertiefung eine zusätzliche mechanische Führung zur Justage geschaffen, sodass kein unerwünschtes Verkippen oder Verdrehen der Empfangslinse bei der geradlinigen Verschiebung in die erste Raumrichtung und/oder in die zweite Raumrichtung gegenüber dem Träger auftritt. Indem die beiden schlitzartigen Vertiefungen auch an unterschiedlichen Bauteilen des Trägers, nämlich einerseits dem Boden und andererseits einer Seitenwand ausgebildet sind, werden die oben genannten Vorteile bezüglich der stabilen Positionierung und möglichst geradlinigen Verschiebung nochmals bekräftigt.

Vorzugsweise ist vorgesehen, dass die zweite Justagevorrichtung eine von oben zugängliche erste schlitzartige Vertiefung in einem Trägerstück des Trägers aufweist, in welcher ein erster Haltebügel, der mit einer Oberkante des Umlenkspiegels verbunden ist, einführbar ist, wobei der erste Haltebügel vor der Positionsfixierung des Umlenkspiegels zum Träger relativ zum Trägersteg in der zweiten Raumrichtung geradlinig verschiebbar ist.

Insbesondere ist vorgesehen, dass die zweite Justagevorrichtung eine zweite schlitzartige Vertiefung in einem Boden des Trägers aufweist, in welche ein zweiter Haltebügel, der mit einer Unterkante des Umlenkspiegels verbunden ist, einführbar ist, wobei der zweite Haltebügel vor der Positionsfixierung des Umlenkspiegels zum Träger relativ zum Träger in der zweiten Raumrichtung geradlinig verschiebbar ist.

Die für die Positionsverschiebung der Empfangslinse relativ zum Träger und somit auch zum optischen Empfänger dargelegten Vorteile gelten im gleichen Maße für die Positionsverschiebung des Umlenkspiegels relativ zum Träger und somit auch zum optischen Empfänger.

Vorzugsweise ist vorgesehen, dass die über die Justagevorrichtung eingestellten Relativpositionen der Empfangslinse zum Träger und des Umlenkspiegels zum Träger durch Klebstoffverbindungen fixiert sind.

Insbesondere ist somit vorgesehen, dass vor der Positionsfixierung der genannten Bauteile, nämlich des Trägers, der Empfangslinse und des Umlenkspiegels zueinander die Einstellung der Relativposition der drei Komponenten zueinander über die Positionsveränderung der Empfangslinse und/oder des Umlenkspiegels über die Justagevorrichtungen sehr präzise und definiert und auch gewollt erfolgt. Erst dann, wenn diese richtigen Relativpositionen zueinander gefunden sind, wird die Positionsfixierung der genannten Komponenten zueinander durchgeführt, indem die Klebstoffverbindungen ausgebildet werden. Die Klebstoffverbindungen werden insbesondere zwischen den Eingriffselementen des Halterahmens und den schlitzartigen Vertiefungen im Boden und den Seitenwänden des Trägers ausgebildet. Darüber hinaus werden auch die Klebeverbindungen insbesondere zwischen den Haltebügeln und den schlitzartigen Vertiefungen ausgebildet.

In besonders vorteilhafter Weise ist vorgesehen, dass der Umlenkspiegel der Empfangseinheit der Messvorrichtung in seiner Randkontur an die durch Randstrahlen eines Empfangsstrahlenbündels gebildete Kontur angepasst ist. Durch eine derartige Ausgestaltung wird im besonderen Maße Bauraum eingespart. Im Vergleich zu herkömmlichen Ausgestaltungen des Umlenkspiegels, die üblicherweise rechteckig oder quadratisch gestaltet sind, wird durch diese Flächenminimierung des Umlenkspiegels Bauraum eingespart. Diese Erkenntnis beruht darauf, dass beim Eintreffen der Strahlen in die optische Messvorrichtung und insbesondere in die Empfangseinheit diese über eine Empfangslinse hindurchtreten und entsprechend der Form dieser Empfangslinse gebrochen werden. Nach dem Austritt aus der Empfangslinse treffen sie daher in ganz definierter Kontur der Randstrahlen, die das Empfangsstrahlenbündel umfangsseitig begrenzen auf den Umlenkspiegel auf. Da diese Kontur der Randstrahlen üblicherweise kleiner ist als die Fläche der herkömmlichen Umlenkspiegel in den Empfangseinheiten wird dadurch Bauraum verschenkt. Durch die erfindungsgemäße zusätzliche Ausgestaltung des Umlenkspiegels mit seiner ganz definierten und spezifischen Form wird daher diesem optischen Aspekt Rechnung getragen. Die Funktionalität des Umlenkspiegels bleibt ohne Einschränkung, dennoch kann Bauraum der Messvorrichtung eingespart werden. In diesem gewonnen Bauraum können nun andere Komponenten, wie beispielsweise eine Verstellmechanik, Befestigungselemente und andere Komponenten, beispielsweise der Justagevorrichtungen, angeordnet werden.

Vorzugsweise ist der Umlenkspiegel so geformt, dass zumindest zwei nicht parallel zueinander verlaufende gegenüberliegende Randseiten ausgebildet werden.

In besonders vorteilhafter Ausführung ist vorgesehen, dass der Umlenkspiegel eine Trapezform aufweist, bzw. trapezförmig ausgebildet ist. Dies trägt in besonderer Minimierung des Umlenkspiegels der Kontur der Randstrahlen nach dem Verlassen der ein Empfangsstrahlenbündel charakterisierenden Randstrahlen Rechnung.

Der Umlenkspiegel ist darüber hinaus eben ausgebildet, sodass hier insbesondere kein Parabolspiegel eingesetzt ist. Ein möglicher Nachteil von Parabolspiegeln, der darin liegt, dass der Fokus zu einem vorhandenen Empfänger sich reduziert, wodurch sich der einstellbare Toleranzbereich reduziert, was für die Fertigung zu erhöhten Kosten führt, tritt somit bei diesen ebenen Umlenkspiegeln nicht auf.

Vorzugsweise ist im Empfangsstrahlengang vor dem Umlenkspiegel die Empfangslinse angeordnet, durch welche die nach dem Durchdringen der Empfangslinse erzeugte Kontur der Randstrahlen des Empfangsstrahlenbündels erzeugt ist.

Der Umlenkspiegel ist insbesondere schräg gestellt zur Empfangslinse hinter dieser angeordnet, insbesondere mit seinem verjüngten Ende weiter beabstandet zur Hinterfläche der Empfangslinse angeordnet als mit einem breiteren Ende.

Des Weiteren betrifft die Erfindung eine Fahrerassistenzeinrichtung mit einer erfindungsgemäßen optischen Messvorrichtung oder einer vorteilhaften Ausgestaltung davon.

Die Erfindung betrifft darüber hinaus auch ein Fahrzeug mit einer erfindungsgemäßen optischen Messvorrichtung oder einer vorteilhaften Ausgestaltung davon, wobei die Messvorrichtung zur Erfassung von Objekten in der Fahrzeugumgebung ausgebildet ist. Vorzugsweise ist die optische Messvorrichtung zumindest in Teilkomponenten frontseitig, insbesondere im Bereich eines Kühlergrills bzw. Kühlergitters, am Fahrzeug angeordnet.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine perspektivische Darstellung eines Ausführungsbeispiels einer erfindungsgemäßen optischen Messvorrichtung;
- Fig. 2: eine schematische Darstellung eines Ausführungsbeispiels eines erfindungsgemäßen Fahrzeugs mit einer derartigen optischen Messvorrichtung;
- Fig. 3: eine perspektivische Darstellung von Teilkomponenten eines Ausführungsbeispiels einer erfindungsgemäßen optischen Messvorrichtung in einer ersten Positionierung des Trägers, der Empfangslinse und eines Umlenkspiegels der Empfangseinheit;
- Fig. 4: eine perspektivische Darstellung der Teilkomponenten gemäß Fig. 3 in einer zweiten Position der Komponenten zueinander;
- Fig. 5: eine perspektivische Darstellung der Komponenten gemäß Fig. 3 und Fig. 4 in weiterer unterschiedlicher Position der Komponenten zueinander;
- Fig. 6: eine weitere perspektivische Darstellung der Komponenten gemäß Fig. 3 bis Fig. 5 in einer weiteren Explosionsdarstellung der Komponenten;
- Fig. 7: eine perspektivische Darstellung der Empfangslinse und eines Umlenkspiegels einer Empfangseinheit mit einem gezeigten Strahlenverlauf eines Empfangsstrahlenbündels;
- Fig. 8: eine Draufsicht auf die Darstellung gemäß Fig. 7; und
- Fig. 9: eine weitere perspektivische Darstellung der Empfangslinse und verschiedenen Formen eines Umlenkspiegels mit der beispielhaften trapezförmigen Kontur der Randstrahlen des Empfangsstrahlenbündels.

In den Figuren werden gleiche oder funktionsgleiche Elemente mit den gleichen Bezugszeichen versehen.

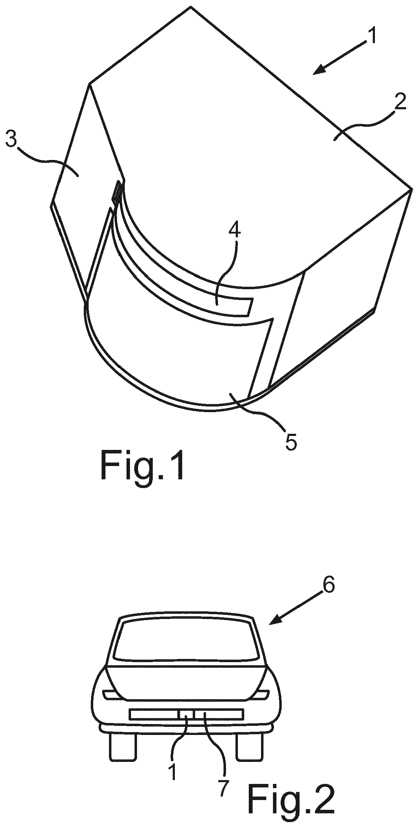

In Fig. 1 ist in einer perspektivischen Darstellung eine optische Messvorrichtung 1 für ein Fahrzeug gezeigt. Die optische Messvorrichtung 1 umfasst ein Gehäuse 2. In dem Gehäuse 2 ist an einer Frontwand 3 ein Sendefenster 4 ausgebildet. Durch das Sendefenster 4 wird gepulstes Laserlicht nach außen abgestrahlt.

Darüber hinaus umfasst das Gehäuse 2 an der Frontwand 3 unterhalb des Sendefensters 4 ein Empfangsfenster 5. Dieses ist im Ausführungsbeispiel größer ausgebildet als das Sendefenster 4. Über das Empfangsfenster 5 werden von in der Fahrzeugumgebung detektierten Objekten zurückgestrahlte Laserstrahlen empfangen und von einer in dem Gehäuse 2 angeordneten Empfangseinheit verarbeitet.

Neben der Empfangseinheit ist in dem Gehäuse 2 auch eine Sendeeinheit angeordnet. Die Sendeeinheit umfasst eine nicht gezeigte Senderplatine, auf welcher beispielsweise ein als gepulster Laser ausgeführter optischer Sender mit einer Sendeoptik angeordnet ist.

Die Empfängereinheit umfasst eine nicht dargestellte Empfängerplatine, auf welcher beispielsweise ein als Detektor ausgeführter optischer Empfänger angeordnet ist, und darüber hinaus auch eine Empfangsoptik aufweist, welche eine Empfangslinse und einen Umlenkspiegel als Empfangsumlenkspiegel aufweisen kann.

Der optische Empfänger ist vorzugsweise eine APD-Diode.

Die Sendeeinheit kann darüber hinaus auch noch eine Umlenkspiegelanordnung in Form von einem oder mehreren Sendeumlenkspiegeln aufweisen, welche beispielsweise in einer gemeinsamen horizontalen Ebene radial beabstandet auf einem Träger bzw. Halter angeordnet sind.

Es kann darüber hinaus auch noch eine andere Betriebseinheit vorgesehen sein, welche die drehbare Achse, um die die Sendeumlenkspiegel gemeinsam drehbar sind, antreibt.

Zwischen den Sendeumlenkspiegeln und der Empfangseinheit, insbesondere der Empfangslinse und dem Empfangsumlenkspiegel kann eine Kodierscheibe angeordnet sein, welche zur Bestimmung des Drehwinkels dieser drehbaren Achse auswertbar ist. Zur Auswertung der Kodierscheibe können entsprechende Aufnehmer bzw. Sensoren angeordnet sein.

Der optische örtlich im Gehäuse 2 feststehende Sender erzeugt gepulste Laserstrahlen, welche über die genannten Sendeumlenkspiegel umgelenkt und durch das Sendefenster 4 in den zu überwachenden Umgebungsbereich abgestrahlt werden. Über das Empfangsfenster 5 werden gepulste reflektierte Laserstrahlen empfangen, die in Reaktion auf die ausgesendeten gepulsten Laserstrahlen von Objekten bzw. Hindernissen reflektiert werden. Die empfangenen Laserstrahlen werden über die Empfangseinheit zum feststehenden optischen Empfänger geleitet. Das Ausgangssignal des optischen Empfängers wird zur Ermittlung der Laufzeit der Laserstrahlen ausgewertet, um die Entfernung zu einem bekannten Objekt in dem Überwachungsbereich zu ermitteln.

In Fig. 2 ist ein Fahrzeug 6 gezeigt, welches ein Personenkraftwagen ist. Die Fig. 2 zeigt eine frontseitige Betrachtung des Fahrzeugs 6 wobei die optische Messvorrichtung 1 im Ausführungsbeispiel frontseitig im Bereich eines Kühlergrills 7 angeordnet ist und Objekte im Umgebungsbereich vor dem Fahrzeug 6 detektierbar sind.

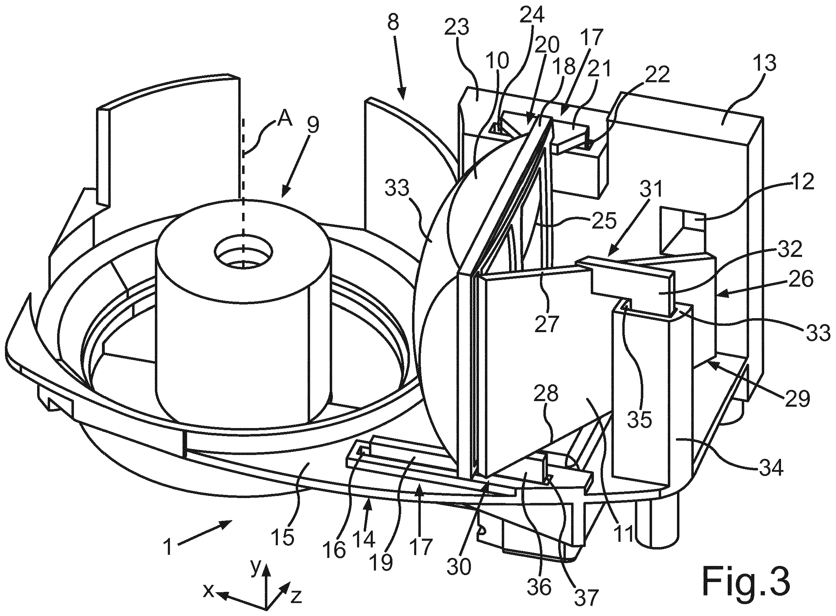

In Fig. 3 ist in einer perspektivischen Darstellung eine Ausführung von Teilkomponenten der optischen Messvorrichtung 1 gezeigt. Diese optische Messvorrichtung 1 umfasst einen Träger 8, der in einem Bereich 9 zur Aufnahme der drehbar gelagerten Komponenten einer Sendeeinheit also auch der drehbar gelagerten Komponenten einer Empfangseinheit ausgebildet ist. Die Drehung kann dabei um die gezeigte Achse A erfolgen.

Der Übersichtlichkeit dienend sind diese genannten Komponenten hier nicht gezeigt. Ein wesentlicher Punkt der vorliegenden Erfindung ist auch anhand der in Fig. 3 gezeigten Teilkomponenten erläuterbar.

Der Träger 8, der im inneren des Gehäuses 2 angeordnet ist, ist zur Aufnahme der angesprochenen Empfangslinse 10 sowie eines der Empfangseinheit zugeordneten Umlenkspiegels 11 ausgebildet. Darüber hinaus ist der Träger 8 zur Aufnahme des feststehenden optischen Empfängers 12 ausgebildet, wobei dieser beispielsweise in einer Seitenwand 13 des Trägers 8 angeordnet ist. Der einstückig ausgebildete Träger 8, der insbesondere aus Kunststoff ist, weist darüber hinaus auch einen Boden 14 auf, an dem die vertikal stehende Seitenwand 13 angeformt ist.

An einer Oberseite 15 des Bodens 14 ist eine schlitzartige Vertiefung 16 in einer ersten Justagevorrichtung 17 ausgebildet. Die erste schlitzartige Vertiefung 16 erstreckt sich geradlinig.

Sie erstreckt sich in eine erste Raumrichtung, nämlich der x-Richtung.

Die Empfangslinse 10 ist im Hinblick auf ihre Umfangskontur viereckig ausgebildet. Sie ist umfangsseitig durch einen Halterahmen 18 zumindest teilweise umgeben. Der Halterahmen 18 weist an einem unteren Teil ein zu diesem Teil senkrecht stehendes erstes Eingriffselement 19 auf. Dieses erste Eingriffselement 19 ist als Streifen bzw. plattenartiges ebenes Element ausgebildet. Es ist gemäß der Darstellung in Fig. 3 zum Eingriff in die erste schlitzartige Vertiefung 16 ausgebildet. Wie dabei zu erkennen ist, ist das erste Eingriffselement 19 im Hinblick auf seine Erstreckung in x-Richtung kürzer als die erste Vertiefung 16, sodass dieses Eingriffselement 19 in geradliniger Richtung in der ersten Raumrichtung gemäß der x-Richtung linear verschiebbar ist.

An dem Halterahmen 18 ist darüber hinaus ein zweites Eingriffselement 20 angeordnet. Dieses ist an einem seitlichen Rahmenteil nach außen stehend angeordnet. Es weist ein trapezförmiges, horizontal abstehendes Teil 21 auf, an dessen äußeren Ende ein vertikal nach unten stehendes Teil 22 angeordnet ist.

Dieses zweite Eingriffselement 20 greift insbesondere mit dem zweiten Teil 22 in eine an einer Oberseite 23 der Seitenwand 13 ausgebildete weitere zweite schlitzartige Vertiefung 24 ein. Auch hier ist vorgesehen, dass sich diese schlitzartige Vertiefung 24 in x-Richtung erstreckt und somit parallel zur ersten schlitzartigen Vertiefung 16 orientiert ist. Auch hier ist die Erstreckung der zweiten schlitzartigen Vertiefung 24 in x-Richtung größer als die Ausdehnung des Teils 22 in diese x-Richtung. Auch dieses zweite Eingriffselement 20 mit dem Teil 22 kann somit in der ersten Raumrichtung gemäß der x-Richtung in definierter und geführter Weise linear hin und her verschoben werden.

Durch diese Verschiebemöglichkeit kann die Empfangslinse 10, die fest mit dem Halterahmen 18 verbunden ist, relativ zum Träger 8 und somit auch zum am Träger 8 feststehenden optischen Empfänger 12 positionsverschoben werden.

Darüber hinaus ist vorgesehen, dass die Vertiefungen 16 und 24 sowie auch die Eingriffselemente 19 und 20 derart gestaltet sind, dass nicht nur eine Relativverschiebung dieser ersten Raumrichtung in x-Richtung erfolgen kann, sondern auch eine Relativverschiebung in einer dazu senkrechten zweiten Raumrichtung, nämlich der y-Richtung. Es kann nämlich auch erreicht werden, dass diese Empfangslinse 10 mittels dieser Justagevorrichtung 17 in y-Richtung nach oben oder nach unten gegenüber dem Träger 8 verschoben wird und die Eingriffselemente 16 und 20 dennoch weiterhin im Eingriff mit den Vertiefungen 16 und 24 sind.

Darüber hinaus ist es auch gewährleistet, dass der gegenüber einer sich insbesondere in der y-z-Ebene erstreckenden Hinterfläche 25 der Empfangslinse 10 dahinter angeordnete Umlenkspiegel 11 schräg geneigt dazu orientiert, wie dies in Fig. 3 gezeigt ist.

Wie aus der Darstellung in Fig. 3 auch zu erkennen ist, weist der Umlenkspiegel 11 eine Randkontur 26 auf, die trapezförmig ist. Dazu sind insbesondere zwei gegenüberliegende Randseiten 27 und 28 nicht parallel verlaufend ausgebildet.

Der Umlenkspiegel 11 weist im Ausführungsbeispiel eine Trapezform auf und ist darüber hinaus eben ausgebildet.

Wie aus der Darstellung in Fig. 3 zu erkennen ist, ist ein verjüngtes Ende 29 des Umlenkspiegels 11 weiter beabstandet zu dieser Hinterfläche 25 als ein breiteres Ende 30 des Umlenkspiegels 11.

Der Umlenkspiegel 11 ist darüber hinaus durch eine zweite Justagevorrichtung 31 zumindest in der zweiten Raumrichtung gemäß der y-Richtung relativ verschiebbar gegenüber dem Träger 8 und somit auch gegenüber dem optischen Empfänger 12 positionierbar.

Die zweite Justagevorrichtung 31 weist einen Haltebügel 32 auf der mit der oberen Randseite 27 des Umlenkspiegels 11 fest verbunden ist. Darüber hinaus ist der Haltebügel in eine an einer Oberseite 33 eines Trägerstegs 34, der auf dem Boden 14 aufsitzt, ausgebildete weitere schlitzartige Vertiefung 35 eingreifend angeordnet.

Darüber hinaus ist vorgesehen, dass die zweite Justagevorrichtung 31 einen weiteren Haltebügel 36 aufweist, der mit einer unteren Randseite 28 des Umlenkspiegels 11 fest verbunden ist. Dieser Haltebügel 36 ist wiederum zum Eingriff in eine in dem Boden 14 ausgebildete weitere schlitzartige Vertiefung 37 eingreifend angeordnet.

Der Umlenkspiegel 11 kann somit präzise geführt in der genannten y-Richtung relativ gegenüber dem Träger 8 und/oder der Empfangslinse 10 linear verschoben werden.

Diese relative Positionseinstellung der genannten Komponenten, nämlich der Empfangslinse 10, des Umlenkspiegels 11 und des Trägers 8 (und damit des feststehenden Empfängers 12) kann vor der Positionsfixierung dieser genannten Komponenten zueinander erfolgen. Ist die richtige Justage durch diese relative Positionseinstellungsmöglichkeit über die Justagevorrichtungen 17 und 31 erreicht, so kann diese Position fixiert werden. Dazu werden in Fig. 3 nicht gezeigte Klebstoffverbindungen ausgebildet. Diese Klebstoffverbindungen werden insbesondere im Bereich zwischen dem Eingriffselement 19 und der Vertiefung 16, der Vertiefung 24 und dem Eingriffselement 20, dem Haltebügel 32 und der Vertiefung 35 und dem Haltebügel 36 und der Vertiefung 37 ausgebildet.

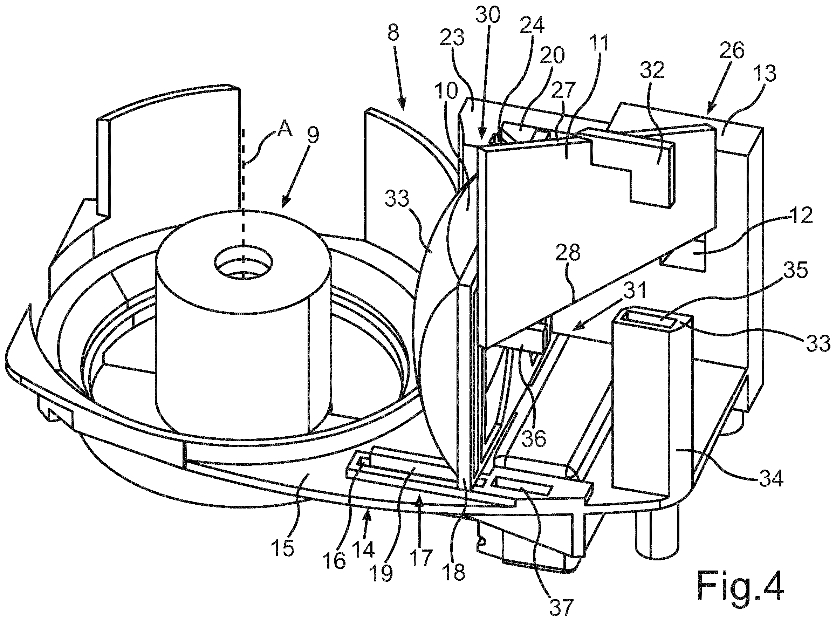

In Fig. 4 ist in einer weiteren perspektivischen Darstellung der Komponenten gemäß Fig. 3 ein Zustand gezeigt, bei dem der Umlenkspiegel 11 mit den Haltebügeln 32 und 36 entnommen aus den Vertiefungen 35 und 37 gezeigt ist.

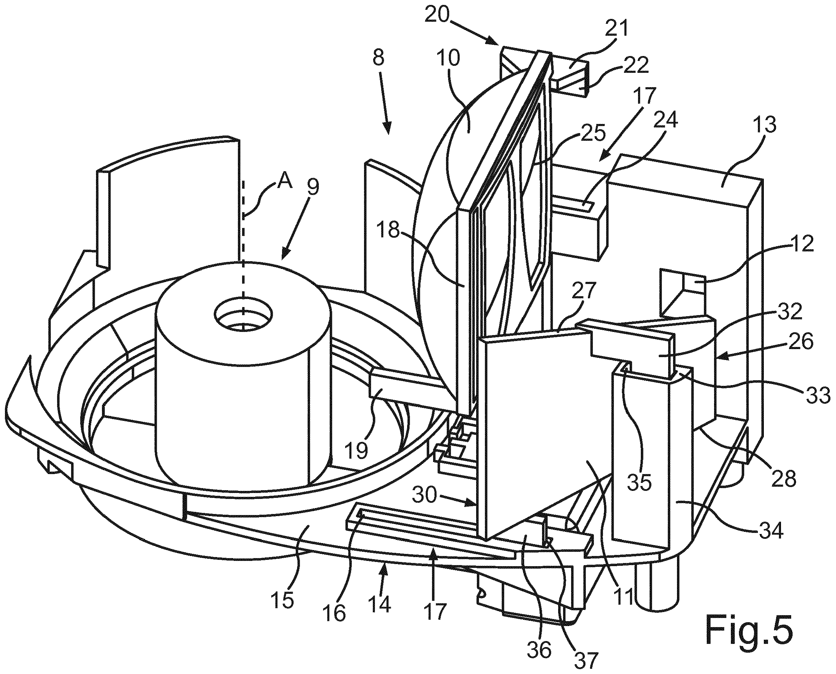

In Fig. 5 ist demgegenüber eine Darstellung der Komponenten gemäß Fig. 3 und Fig. 4 gezeigt, bei der die Empfangslinse 10 mit dem Halterahmen 18 aus den Schlitzen 16 und 24 entnommen dargestellt ist.

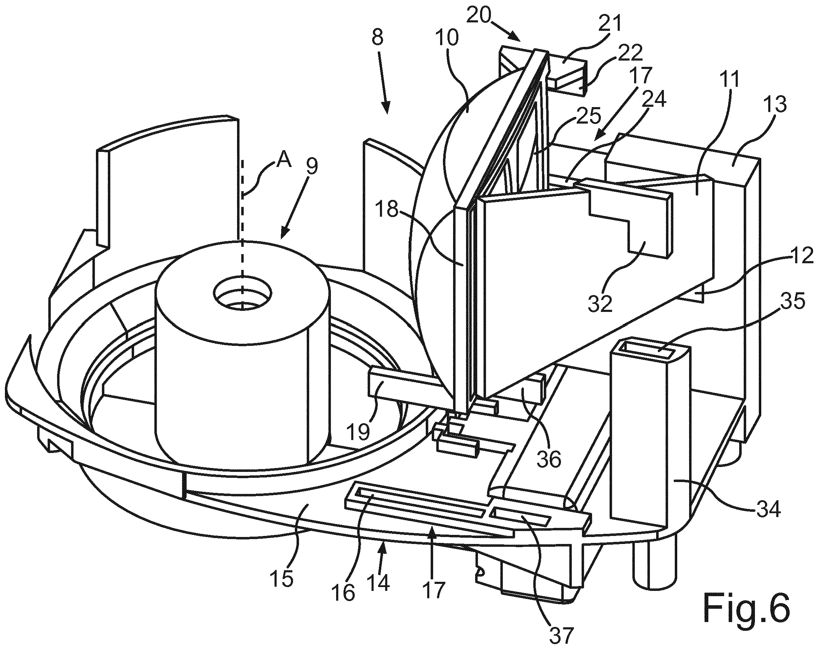

In Fig. 6 ist in einer weiteren perspektivischen Darstellung der Komponenten gemäß den Fig. 3 bis Fig. 5 die Explosionsansicht der Komponenten gezeigt.

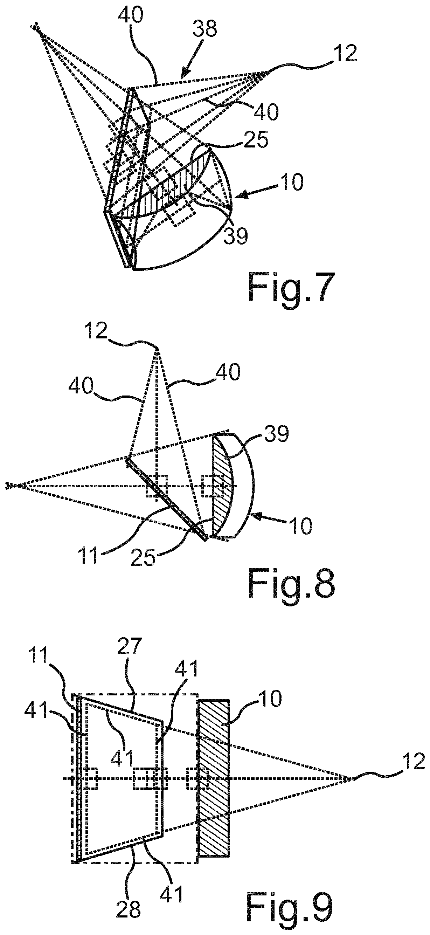

In Fig. 7 ist eine perspektivische Darstellung von unter der Empfangslinse 10 und des Umlenkspiegels 11 gezeigt, wobei darüber hinaus auch der Strahlengang eines Empfangsstrahlenbündels 38 gezeigt ist. Das über das Empfangsfenster 5 in das Gehäuse 2 und zur Empfangseinheit der Messvorrichtung 1 gelangende Empfangsstrahlenbündel 38 trifft auf eine Vorderseite bzw. Vorderfläche 39 der Empfangslinse 10. Aufgrund deren Wölbung wird das Licht in der Empfangslinse 39 entsprechend gebrochen und tritt an der im wesentlichen ebenen Hinterfläche 25 aus. Aufgrund des Einfalls des Empfangsstrahlenbündels 38 und aufgrund der Brechung in der Empfangslinse 10 wird hinter der Empfangslinse 10 ein Empfangsstrahlenbündel 38 generiert, welches die Kontur des Empfangsstrahlenbündels 38 begrenzende Randstahlen 40 aufweist, die eine entsprechende Trapezform bilden. In Fig. 8 ist die Draufsicht auf die Darstellung in Fig. 7 gezeigt.

In Fig. 9 ist diese trapezförmige Kontur 41 zu erkennen und entsprechend gezeigt. In Fig. 9 ist eine Ansicht auf die Vorderfläche 39 gezeigt und der hinter der Empfangslinse 10 angeordnete Spiegel 11 gezeigt. Zur Verdeutlichung ist in Fig. 9 die Trapezform des Umlenkspiegels 11 nochmals dargestellt, welche im Wesentlichen der trapezförmigen Kontur 41 der Randstrahlen 40 des Empfangsstrahlenbündels 38, wie sie auf den Umlenkspiegel 11 auftreffen, entspricht. Zur Verdeutlichung der Unterschiedlichkeit ist auch ein herkömmlicher rechteckiger oder quadratischer Umlenkspiegel durch die strichpunktierte Umrissdarstellung gezeigt. Es ist deutlich zu erkennen, dass durch die herkömmliche Form ein großer Flächenbereich des Umlenkspiegels 11 für die Umlenkung des einfallenden Empfangsstrahlenbündels 38 gar nicht benötigt wird und daher bei den bekannten herkömmlichen Ausgestaltungen unnötig Bauraum beansprucht wird. Durch die ganz individuelle formangepasste Ausgestaltung des neuen Umlenkspiegels 11 wird dies verhindert, dennoch das gesamte Empfangsstrahlenbündel 38 umgelenkt und zum optischen Empfänger 12 geleitet.

## Patentansprüche

1. Optische Messvorrichtung (1) für ein Fahrzeug (6), mit zumindest einem optischen Sender, zumindest einem optischen Empfänger (12) und einer Umlenkspiegelanordnung mit zumindest einem Umlenkspiegel (11),
**dadurch gekennzeichnet, dass**
die Messvorrichtung (1) einen Träger (8) aufweist, an dem eine erste Justagevorrichtung (17) ausgebildet ist, durch welche eine in einem Empfangsstrahlengang (38) angeordnete Empfangslinse (10) der Messvorrichtung (1) in ihrer Position relativ zum Träger (8) einstellbar ist und eine zweite Justagevorrichtung (31) ausgebildet ist, durch welche ein im Empfangsstrahlengang (38) angeordneter Umlenkspiegel (11) in seiner Position relativ zum Träger (8) einstellbar ist, wobei
die Empfangslinse (10) einen Halterahmen (18) aufweist, an dem Eingriffselemente (19, 20) zum Eingriff in die erste Justagevorrichtung (17) ausgebildet sind, und
der Halterahmen (18) die Empfangslinse (10) umfangsseitig zumindest teilweise umgreift.

2. Optische Messvorrichtung (1) nach Anspruch 1,
**dadurch gekennzeichnet, dass**
ein erstes Eingriffselement (19) an einer Unterseite des Halterahmens (18) angeordnet ist und als streifenartige Lasche ausgebildet ist.

3. Optische Messvorrichtung (1) nach Anspruch 1 oder 2,
**dadurch gekennzeichnet, dass**
eine erste schlitzartige Vertiefung (16) der ersten Justagevorrichtung (17) in einem Boden (14) des Trägers (8) ausgebildet ist und ein erstes Eingriffselement (19) zur Justage in der ersten Vertiefung (16) vor der Positionsfixierung der Empfangslinse (10) zum Träger (8) in einer ersten Raumrichtung und/oder in einer dazu senkrechten zweiten Raumrichtung geradlinig verschiebbar angeordnet ist.

4. Optische Messvorrichtung (1) nach einem der vorhergehenden Ansprüche 1 bis 3, **dadurch gekennzeichnet, dass**
eine zweite schlitzartige Vertiefung (24) der ersten Justagevorrichtung (17) in einer Seitenwand (13) des Trägers (8) ausgebildet ist und ein zweites Eingriffselement (20) zur Justage in der zweiten Vertiefung (24) vor der Positionsfixierung der Empfangslinse (10) zum Träger (8) in einer ersten Raumrichtung und/oder in einer dazu senkrechten zweiten Raumrichtung geradlinig verschiebbar angeordnet ist.

5. Optische Messvorrichtung (1) nach einem der vorhergehenden Ansprüche, **dadurch gekennzeichnet, dass**
die zweite Justagevorrichtung (31) eine von oben zugängliche erste schlitzartige Vertiefung (35) in einem Trägersteg (34) des Trägers (8) aufweist, in welche ein erster Haltebügel (32), der mit einer oberen Randseite (27) des Umlenkspiegels (11) verbunden ist, einführbar ist, wobei der erste Haltebügel (32) vor der Positionsfixierung des Umlenkspiegels (11) zum Träger (8) relativ zum Trägersteg (34) in der zweiten Raumrichtung geradlinig verschiebbar ist.

6. Optische Messvorrichtung (1) nach einem der vorhergehenden Ansprüche, **dadurch gekennzeichnet, dass**
die zweite Justagevorrichtung (31) eine zweite schlitzartige Vertiefung (37) in einem Boden (14) des Trägers (8) aufweist, in welche ein zweiter Haltebügel (36), der mit einer unteren Randseite (28) des Umlenkspiegels (11) verbunden ist, einführbar ist, wobei der zweite Haltebügel (36) vor der Positionsfixierung des Umlenkspiegels (11) zum Träger (8) relativ zum Träger (8) in der zweiten Raumrichtung geradlinig verschiebbar ist.

7. Optische Messvorrichtung (1) nach einem der vorhergehenden Ansprüche, **dadurch gekennzeichnet, dass**
die über die Justagevorrichtungen (17, 31) eingestellten Relativpositionen der Empfangslinse (10) zum Träger (8) und des Umlenkspiegels (11) zum Träger (8) durch Klebstoffverbindungen fixiert sind.

8. Optische Messvorrichtung (1) nach einem der vorhergehenden Ansprüche, **dadurch gekennzeichnet, dass**
der Umlenkspiegel (11) trapezförmig und eben ausgebildet ist.

9. Fahrerassistenzeinrichtung mit einer optischen Messvorrichtung (1) nach einem der vorhergehenden Ansprüche.

10. Fahrzeug (6) mit einer optischen Messvorrichtung (1) nach einem der vorhergehenden Ansprüche 1 bis 9, wobei die Messvorrichtung (1) zur Erfassung von Objekten in der Fahrzeugumgebung ausgebildet ist.

11. Fahrzeug (6) nach Anspruch 10,
**dadurch gekennzeichnet, dass**
die optische Messvorrichtung (1) zumindest in Teilkomponenten frontseitig, insbesondere im Bereich eines Kühlergrills (7), am Fahrzeug (1) angeordnet ist.

## Claims

1. Optical measurement apparatus (1) for a vehicle (6), having at least one optical transmitter, at least one optical receiver (12) and a deflection mirror arrangement having at least one deflection mirror (11), **characterized in that**
the measurement apparatus (1) has a carrier (8), on which a first adjustment apparatus (17) is formed, by way of which a receiving lens (10), which is arranged in a receiving beam path (38), of the measurement apparatus (1) is adjustable in terms of its position relative to the carrier (8), and a second adjustment apparatus (31) is formed, by way of which a deflection mirror (11), which is arranged in the receiving beam path (38), is adjustable in terms of its position relative to the carrier (8), wherein
the receiving lens (10) has a holding frame (18) on which engagement elements (19, 20) for engagement in the first adjustment apparatus (17) are formed, and the holding frame (18) at least partially peripherally encloses the receiving lens (10).

2. Optical measurement apparatus (1) according to Claim 1,
**characterized in that**
a first engagement element (19) is arranged on an underside of the holding frame (18) and is configured in the form of a strip-type tab.

3. Optical measurement apparatus (1) according to Claim 1 or 2,
**characterized in that**
a first slit-type depression (16) of the first adjustment apparatus (17) is formed in a bottom (14) of the carrier (8) and a first engagement element (19) for adjustment in the first depression (16) before the position fixing of the receiving lens (10) to the carrier (8) is arranged so as to be rectilinearly displaceable in a first spatial direction and/or in a second spatial direction that is perpendicular to the first one.

4. Optical measurement apparatus (1) according to one of the preceding Claims 1 to 3,
**characterized in that**
a second slit-type depression (24) of the first adjustment apparatus (17) is formed in a side wall (13) of the carrier (8) and a second engagement element (20) for adjustment in the second depression (24) before the position fixing of the receiving lens (10) to the carrier (8) is arranged so as to be rectilinearly displaceable in a first spatial direction and/or in a second spatial direction that is perpendicular to the first one.

5. Optical measurement apparatus (1) according to one of the preceding claims,
**characterized in that**
the second adjustment apparatus (31) has a first slit-type depression (35), which is accessible from above, in a carrier bar (34) of the carrier (8), into which a first holding bracket (32), which is connected to an upper edge side (27) of the deflection mirror (11), is insertable, wherein the first holding bracket (32) is rectilinearly displaceable relative to the carrier bar (34) in the second spatial direction before the position fixing of the deflection mirror (11) to the carrier (8).

6. Optical measurement apparatus (1) according to one of the preceding claims,
**characterized in that**
the second adjustment apparatus (31) has a second slit-type depression (37) in a bottom (14) of the carrier (8) into which a second holding bracket (36), which is connected to a lower edge side (28) of the deflection mirror (11), is insertable, wherein the second holding bracket (36) is rectilinearly displaceable relative to the carrier (8) in the second spatial direction before the position fixation of the deflection mirror (11) to the carrier (8).

7. Optical measurement apparatus (1) according to one of the preceding claims,
**characterized in that**
the relative positions of the receiving lens (10) to the carrier (8) and of the deflection mirror (11) to the carrier (8) which are set by the adjustment apparatuses (17, 31) are fixed by adhesive bonds.

8. Optical measurement apparatus (1) according to one of the preceding claims,
**characterized in that**
the deflection mirror (11) is embodied to be trapezoidal and planar.

9. Driver assistance device having an optical measurement apparatus (1) according to one of the preceding claims.

10. Vehicle (6) having an optical measurement apparatus (1) according to one of the preceding Claims 1 to 9, wherein the measurement apparatus (1) is configured for capturing objects in the vehicle environment.

11. Vehicle (6) according to Claim 10,
**characterized in that**
the optical measurement apparatus (1) is arranged at least in partial components on the front side, in particular in the region of a grille (7) on the vehicle (1).

## Revendications

1. Dispositif de mesure optique (1) pour un véhicule (6), comprenant au moins un émetteur optique, au moins un récepteur optique (12) et un arrangement de miroirs de déviation comprenant au moins un miroir de déviation (11),
**caractérisé en ce que**
le dispositif de mesure (1) possède un élément porteur (8) sur lequel est configuré un premier dispositif d'ajustage (17) par lequel peut être réglée la position par rapport à l'élément porteur (8) d'une lentille de réception (10) du dispositif de mesure (1) disposée dans un trajet de rayon de réception (38), et un deuxième dispositif d'ajustage (31) est configuré, par lequel peut être réglée la position par rapport à l'élément porteur (8) d'un miroir de déviation (11) disposé dans le trajet de rayon de réception (38),
la lentille de réception (10) possédant un cadre de maintien (18) au niveau duquel sont configurés des éléments de mise en prise (19, 20) destinés à venir en prise dans le premier dispositif d'ajustage (17), et le cadre de maintien (18) enveloppant au moins partiellement la lentille de réception (10) du côté du pourtour.

2. Dispositif de mesure optique (1) selon la revendication 1, **caractérisé en ce que** le premier élément de mise en prise (19) est disposé sur un côté inférieur du cadre de maintien (18) et est réalisé sous la forme d'une patte en forme de bande.

3. Dispositif de mesure optique (1) selon la revendication 1 ou 2, **caractérisé en ce qu'**une première empreinte (16) en forme de fente du premier dispositif d'ajustage (17) est formée dans un fond (14) de l'élément porteur (8) et un premier élément de mise en prise (19), pour l'ajustage, est disposé de manière coulissante en ligne droite dans la première empreinte (16) dans une première direction spatiale et/ou dans une deuxième direction spatiale perpendiculaire à celle-ci avant le blocage de la position de la lentille de réception (10) par rapport à l'élément porteur (8).

4. Dispositif de mesure optique (1) selon l'une des revendications 1 à 3, **caractérisé en ce qu'**une deuxième empreinte (24) en forme de fente du premier dispositif d'ajustage (17) est formée dans une paroi latérale (13) de l'élément porteur (8) et un deuxième élément de mise en prise (20), pour l'ajustage, est disposé de manière coulissante en ligne droite dans la deuxième empreinte (24) dans une première direction spatiale et/ou dans une deuxième direction spatiale perpendiculaire à celle-ci avant le blocage de la position de la lentille de réception (10) par rapport à l'élément porteur (8).

5. Dispositif de mesure optique (1) selon l'une des revendications précédentes, **caractérisé en ce que** le deuxième dispositif d'ajustage (31) possède une première empreinte (35) en forme de fente dans une nervure d'élément porteur (34) de l'élément porteur (8), dans laquelle peut être introduit un premier étrier de maintien (32) qui est relié à un côté de bordure supérieur (27) du miroir de déviation (11), le premier étrier de maintien (32) pouvant coulisser en ligne droite dans la deuxième direction spatiale par rapport à la nervure d'élément porteur (34) avant le blocage de la position du miroir de déviation (11) par rapport à l'élément porteur (8).

6. Dispositif de mesure optique (1) selon l'une des revendications précédentes, **caractérisé en ce que** le deuxième dispositif d'ajustage (31) possède une deuxième empreinte (37) en forme de fente dans un fond (14) de l'élément porteur (8), dans laquelle peut être introduit un deuxième étrier de maintien (36) qui est relié à un côté de bordure inférieur (28) du miroir de déviation (11), le deuxième étrier de maintien (36) pouvant coulisser en ligne droite dans la deuxième direction spatiale par rapport à l'élément porteur (8) avant le blocage de la position du miroir de déviation (11) par rapport à l'élément porteur (8).

7. Dispositif de mesure optique (1) selon l'une des revendications précédentes, **caractérisé en ce que** les positions relatives réglées par le biais des dispositifs d'ajustage (17, 31) de la lentille de réception (10) par rapport à l'élément porteur (8) et du miroir de déviation (11) par rapport à l'élément porteur (8) sont bloquées par des assemblages à l'adhésif.

8. Dispositif de mesure optique (1) selon l'une des revendications précédentes, **caractérisé en ce que** le miroir de déviation (11) est de configuration trapézoïdale et plane.

9. Système d'assistance au conducteur comprenant un dispositif de mesure optique (1) selon l'une des revendications précédentes.

10. Véhicule (6) comprenant un dispositif de mesure optique (1) selon l'une des revendications précédentes 1 à 9, le dispositif de mesure optique (1) étant configuré pour détecter des objets dans l'environnement du véhicule.

11. Véhicule (6) selon la revendication 10, **caractérisé en ce que** le dispositif de mesure optique (1), au moins en composants partiels, est disposé du côté avant sur le véhicule (1), notamment dans la zone d'une calandre (7).
